# EUROPEAN PATENT SPECIFICATION

(11) **EP 3 331 085 B1**
(45) Date of publication and mention of the grant of the patent: **12.06.2019**
(21) Application number: 16842364.8
(22) Date of filing: 02.09.2016
(51) Int. Cl.: H01M 10/058, H01M 2/02, H01M 4/75, H01M 10/04, H01M 10/0525, H01M 4/02

(54) **CABLE-TYPE SECONDARY BATTERY AND METHOD FOR MANUFACTURING THE SAME**
KABELARTIGE SEKUNDÄRBATTERIE UND VERFAHREN ZUR HERSTELLUNG DAVON
BATTERIE SECONDAIRE À CÂBLE ET SON PROCÉDÉ DE FABRICATION

(30) Priority: 03.09.2015 KR 20150124982
(43) Date of publication of application: 06.06.2018
(73) Proprietor: LG Chem, Ltd., Seoul 07336 (KR)
(72) Inventor: KWON, Yo-Han, Daejeon 34122 (KR); YUK, Young-Ji, Daejeon 34122 (KR); KIM, Sang-Hun, Daejeon 34122 (KR); KIM, Je-Young, Daejeon 34122 (KR); UHM, In-Sung, Daejeon 34122 (KR)
(74) Representative: Cabinet Plasseraud
(86) International application number: PCT/KR2016/009869
(87) International publication number: WO 2017/039398

(56) References cited:
- JP-A- 2001 202 997
- JP-A- 2009 224 147
- KR-A- 20080 025 436
- KR-B1- 101 470 554
- KR-B1- 101 483 239
- US-A- 4 608 323

## Description

### TECHNICAL FIELD

The present disclosure relates to a freely deformable cable-type secondary battery and a method for manufacturing the same. More particularly, the present disclosure relates to a cable-type secondary battery which is prevented from separation of an electrode active material layer and includes an electrode having improved flexibility, and a method for manufacturing the same.

The present application claims priority to Korean Patent Application No. 10-2015-0124982 filed on September 3, 2015 in the Republic of Korea.

### BACKGROUND ART

In recent times, a secondary battery refers to a device which converts external electric energy into the form of chemical energy and stores it therein, and then generates electricity as necessary. Such a secondary battery is also called the name of 'rechargeable battery' which means a battery capable of being charged many times. Typical secondary batteries include a lead storage battery, nickel cadmium (Ni-Cd) battery, nickel metal hydride (NiMH) battery, lithium ion (Li-ion) battery and a lithium ion (Li-ion) polymer battery. A secondary battery provides both an economical advantage and an environmental advantage as compared to a disposable primary battery.

Currently, a secondary battery is used for some applications requiring low electric power. For example, such applications include a device that helps starting of a car, portable system, instrument and a no-brake power supply system. Recently, development of wireless communication technology leads popularization of a portable system. In addition, there is a tendency to convert many conventional systems into wireless systems. Under these circumstances, there is an exploding demand for secondary batteries. Further, hybrid cars and electric cars have been commercialized with a view to preventing environmental pollution. Such next-generation vehicles adopt secondary batteries to reduce the cost and weight and to increase the service life.

In general, secondary batteries are generally provided as cylindrical, prismatic or pouch-type batteries. This is because secondary batteries are manufactured by installing an electrode assembly including a negative electrode, positive electrode and a separator into a cylindrical or prismatic metal can or a pouch-type case made of an aluminum laminate sheet, and then injecting an electrolyte to the electrode assembly. Therefore, a predetermined space for installing a secondary battery is required essentially. Thus, such cylindrical, prismatic or pouch-like shapes of secondary batteries undesirably function as limitations in developing various types of portable systems. As a result, there is a need for a novel type of secondary battery which allows easy deformation.

In this context, a cable-type secondary battery, which has a significantly larger ratio of length to sectional diameter, has been suggested. Such a cable-type secondary battery further includes a packaging for the purpose of protection from the outside. However, the packaging may not be formed skin-tightly so that an electrode active material layer may undergo rapid volumetric swelling during the stress caused by external force or during charging/discharging, thereby causing separation of the packaging, a decrease in capacity and degradation of cycle life characteristics. The document KR 101 470 554 B1 discloses a cable-type secondary battery according to prior art.

### DISCLOSURE

### Technical Problem

The present disclosure is designed to solve the problems of the related art, and therefore the present disclosure is directed to providing a cable-type secondary battery which has a packaging formed skin-tightly on the outer surface of an electrode assembly and thus shows flexibility even when external force is applied to the cable-type secondary battery. The present disclosure is also directed to providing a method for preparing the cable-type secondary battery.

### Technical Solution

The present invention is defined by the subject-matter of the appended claims. In one aspect of the present disclosure, there is provided a cable-type secondary battery comprising: an electrode assembly comprising an inner electrode, a separator layer formed to surround the inner electrode, and an outer electrode formed to surround the outer surface of the separator layer; and a packaging surrounding the electrode assembly, wherein the packaging surrounds the top surface and the bottom surface of the electrode and a portion of the packaging is overlapped at an end thereof and sealed by heat compression, and the overlapped end is folded along the perimeter of the packaging to be a wing portion, the wing portion having a width of 1 to 2 mm.

Preferably, the packaging may comprise a water barrier film, and a first sealant polymer layer and a mechanical support layer formed on both surfaces of the water barrier film.

Preferably, the packaging may further comprise a second sealant polymer layer formed on the surface of the mechanical support layer.

Preferably, the packaging may further comprise an adhesive layer at the outermost part thereof.

The wing portion has a width of 1 to 2 mm.

Preferably, the cable-type secondary battery may further comprise a heat shrinkable tube surrounding the packaging.

The heat shrinkable tube may comprise at least one selected from the group consisting of polyolefin, polyester, fluororesin and polyvinyl chloride (PVC).

Preferably, the water barrier film may comprise a metallic sheet or polymer sheet.

The metallic sheet may comprise any one selected from the group consisting of iron (Fe), carbon (C), chromium (Cr), manganese (Mn), nickel (Ni), copper (Cu), aluminum (Al) and equivalents thereof, or an alloy of at least two of them.

The polymer sheet may be at least one selected from the group consisting of polyethylene (PE) sheets, polypropylene sheets, polymer clay composites and liquid crystalline polymer sheets.

Preferably, the first sealant polymer layer may comprise at least one selected from the group consisting of polypropylene-co-acrylic acid, polyethylene-co-acrylic acid, polypropylene chloride, polypropylene-butylene-ethylene terpolymer, polypropylene, polyethylene and polyethylene-co-propylene.

Preferably, the second sealant polymer layer may comprise at least one selected from the group consisting of polypropylene-co-acrylic acid, polyethylene-co-acrylic acid, polypropylene chloride, polypropylene-butylene-ethylene terpolymer, polypropylene, polyethylene and polyethylene-co-propylene.

Preferably, the mechanical support layer may comprise any one selected from the group consisting of polyester, polyamide, polyimide and polyolefin, or a mixture of at least two of them.

In another aspect of the present disclosure, there is provided a method for manufacturing a cable-type secondary battery, comprising the steps of:
(S1) preparing an electrode assembly including an inner electrode, a separator layer formed to surround the inner electrode and an outer electrode formed to surround the outer surface of the separator layer;
(S2) disposing a packaging to surround the top surface and the bottom surface of the electrode assembly;
(S3) bringing a portion of the packaging overlapped at an end thereof into heat compression for sealing; and
(S4) folding the overlapped end being heat compressed along the perimeter of the packaging to form a wing portion, the wing portion having a width of 1 to 2 mm.

Preferably, the steps of (S3) and (S4) may be carried out by using sealing tools of top and bottom surface portions.

Preferably, in the step of (S4), the wing portion may be formed by way of physical folding, or by way of physical folding and then additional heat compression.

Preferably, in the step of (S4), the wing portion may be formed by rotating the electrode assembly surrounded with the packaging in the sealing tools.

Preferably, the packaging may comprise a water barrier film, and a first sealant polymer layer and a mechanical support layer formed on both surfaces of the water barrier film.

Preferably, the packaging may further comprise a second sealant polymer layer formed on the surface of the mechanical support layer.

Preferably, the packaging may further comprise an adhesive layer at the outermost part thereof.

The wing portion has a width of 1 to 2 mm.

Preferably, the method may further comprise a step (S5) of inserting the electrode assembly surrounded with the packaging into a heat shrinkable tube, followed by heating so that the heat shrinkable tube is shrunk by heat to seal the packaging surrounding the electrode assembly.

The heat shrinkable tube may comprise at least one selected from the group consisting of polyolefin, polyester, fluororesin and polyvinyl chloride (PVC).

Preferably, the water barrier film may comprise a metallic sheet or polymer sheet.

The metallic sheet may comprise any one selected from the group consisting of iron (Fe), carbon (C), chromium (Cr), manganese (Mn), nickel (Ni), copper (Cu), aluminum (Al) and equivalents thereof, or an alloy of at least two of them.

The polymer sheet may be at least one selected from the group consisting of polyethylene (PE) sheets, polypropylene sheets, polymer clay composites and liquid crystalline polymer sheets.

Preferably, the first sealant polymer layer may comprise at least one selected from the group consisting of polypropylene-co-acrylic acid, polyethylene-co-acrylic acid, polypropylene chloride, polypropylene-butylene-ethylene terpolymer, polypropylene, polyethylene and polyethylene-co-propylene.

Preferably, the second sealant polymer layer may comprise at least one selected from the group consisting of polypropylene-co-acrylic acid, polyethylene-co-acrylic acid, polypropylene chloride, polypropylene-butylene-ethylene terpolymer, polypropylene, polyethylene and polyethylene-co-propylene.

Preferably, the mechanical support layer may comprise any one selected from the group consisting of polyester, polyamide, polyimide and polyolefin, or a mixture of at least two of them.

### Advantageous Effects

According to the present disclosure, a packaging is formed skin-tightly on the outer surface of an electrode assembly, and thus it is possible to improve flexibility significantly even when external force is applied to a cable-type secondary battery.

Therefore, it is possible to prevent a decrease in capacity of a battery and to improve the cycle life characteristics of a battery.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 shows a cable-type secondary battery comprising a conventional packaging.
FIG. 2a and FIG. 2b are schematic views illustrating the method for manufacturing a cable-type secondary battery according to an embodiment of the present disclosure.
FIG. 3 is a sectional view illustrating a cable-type secondary battery packed according to an embodiment of the present disclosure.
FIG. 4 is a sectional view illustrating a cable-type secondary battery in which the wing portion is folded according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

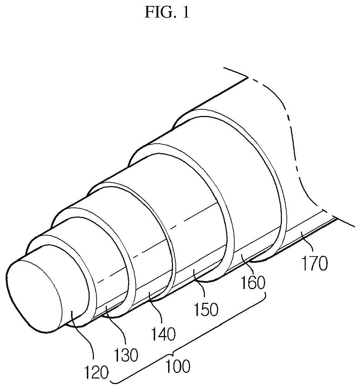

FIG. 1 shows a cable-type secondary battery comprising a conventional packaging. Referring to FIG. 1, the cable-type secondary battery comprises: an electrode assembly 100 including an inner electrode provided with an inner electrode current collector 110 and an inner electrode active material layer formed on the surface of the inner electrode current collector 110, a separator layer 130 formed to surround the outer surface of the inner electrode and configured to prevent a short-circuit of the electrode, and an outer electrode provided with an outer electrode active material layer 140 formed to surround the outer surface of the separator layer and an outer electrode current collector 150 formed to surround the outer surface of the outer electrode active material layer; and a packaging 170 formed to surround and seal the whole outer surface of the electrode assembly 100.

It is required for a packaging for protecting a cable-type secondary battery to have flexibility and water barrier property at the same time. When using a conventional tube packaging made of a polymer material, water or air may infiltrate through the fine pores of the polymer, resulting in contamination of the electrolyte in a battery. This may cause degradation of the performance of a battery. To overcome the problem, a packaging formed of a metal foil layer may be used. However, since such a metal foil layer is rigid in nature, it cannot be bent completely but the surface of the metal foil layer may be folded or wrinkles may be generated when the battery is bent, and thus the metal foil layer may be torn. Particularly, even when a packaging is formed skin-tightly on a cable-type electrode assembly, the electrode assembly and the packaging are not fixed to each other due to a space therebetween. Therefore, the wrinkles is generated on the metal foil layer when the battery is bent, and the wrinkles may damage the electrode assembly in the battery.

To solve the above-mentioned problem, the cable-type secondary battery according to an embodiment of the present disclosure comprises: an electrode assembly comprising an inner electrode, a separator layer formed to surround the inner electrode, and an outer electrode formed to surround the outer surface of the separator layer; and a packaging surrounding the electrode assembly, wherein the packaging surrounds the top surface and the bottom surface of the electrode and a portion of the packaging is overlapped at an end thereof and sealed by heat compression, and the overlapped end is folded along the perimeter of the packaging to be a wing portion.

The packaging may consist of two sheets which are each formed on the top surface and the bottom surface of the electrode assembly, the two sheets are overlapped on their both ends and the overlapped ends are brought into heat compression so that the packaging may be formed skin-tightly on the outer surface of the outer electrode. Also, one sheet of packaging may be used to surround the electrode assembly in which both ends of the sheet are overlapped on one side and the overlapped end is brought into heat compression for skin-tight sealing on the outer surface of the outer electrode. Therefore, when two sheets of packaging are used, two wing portions may be formed at both ends. When one sheet of packaging is used, one wing portion may be formed at one end.

The packaging may be provided as a tri-layer structure comprising a water barrier film, and a first sealant polymer layer and a mechanical support layer formed on both surfaces of the water barrier film. The packaging may be provided as a quadri-layer structure further comprising a second sealant polymer layer formed on the surface of the mechanical support layer.

According to an embodiment, the water barrier film functions to prevent infiltration of water from the outside to the inside and may be selected from a metallic sheet and polymer sheet having water barrier property.

The metallic sheet having water barrier property may comprise any one selected from the group consisting of iron (Fe), carbon (C), chromium (Cr), manganese (Mn), nickel (Ni), copper (Cu), aluminum (Al) and equivalents thereof, or an alloy of at least two of them. However, the metallic sheet is not limited to the above examples. When an iron-containing material is used as a metallic sheet, higher mechanical strength is provided. When an aluminum-containing material is used as a metallic sheet, higher flexibility is provided.

In addition, the polymer sheet having water barrier property may be at least one selected from the group consisting of polyethylene (PE) sheets, polypropylene sheets, polymer clay composites and liquid crystalline polymer sheets.

The polymer clay composite means a composite including plate-like clay dispersed in a polymer. Since plate-like clay is arranged in a polymer, the length of a pass way, through which gas is emitted, is increased to inhibit passage of a gaseous ingredient. It is possible to interrupt water based on the same principle. In addition, the liquid crystalline polymer sheet is based on a liquid crystal polymer. In the liquid crystal polymer, a rigid segment including aromatic groups shows a behavior similar to that of a liquid crystal, which increases the length of a pass way in the same manner as clay of the polymer clay, thereby interrupting infiltration of water.

According to another embodiment, the first sealant polymer layer and the second sealant polymer layer have heat adhesion or heat fusion property which allows thermal adhesion. Each of the first sealant polymer layer and the second sealant polymer layer may independently include at least one selected from the group consisting of polypropylene-co-acrylic acid, polyethylene-co-acrylic acid, polypropylene chloride, polypropylene-butylene-ethylene terpolymer, polypropylene, polyethylene and polyethylene-co-propylene.

The mechanical support layer functions to prevent the water barrier film from being torn or damaged by external stress or impact, and any material may be used for the mechanical support layer with no particular limitation, as long as it has such mechanical properties. For example, the mechanical support layer may comprise any one selected from the group consisting of polyester, polyamide, polyimide and polyolefin, or a mixture thereof.

In addition, considering a combination having low adhesion among the water barrier film, the first sealant polymer and the mechanical support layer, an adhesive layer may be further incorporated between the layers facing each other among the water barrier film, the first sealant polymer layer, the mechanical support layer and the second sealant polymer layer. In this manner, it is possible to further improve adhesive property and water barrier property. The adhesive layer may comprise, for example, a composition containing a urethane-based material, acrylic material and a thermoplastic elastomer, but is not limited thereto.

The cable-type secondary battery according to an embodiment of the present disclosure may comprise a heat shrinkable tube surrounding the whole outer surface of the packaging. The heat shrinkable tube means a tube which is shrunk under heating and surrounds a terminal or a material having a different shape or size skin-tightly with no gap. According to the present disclosure, when the cable-type secondary battery having the packaging is inserted into a heat shrinkable tube and then heated, the heat shrinkable tube is shrunk so that skin-tight sealing may be accomplished with no gap between the packaging surrounding the outer surface of the electrode assembly and the shrinking tube. Therefore, it is possible to further improve the water barrier property of the packaging and to obtain an insulation effect through the heat shrinkable tube. In addition, when using only the heat shrinkable tube, water may be introduced into the battery because pores are present structurally in the heat shrinkable tube. However, according to the present disclosure, it is possible for the whole of the packaging and the heat shrinkable tube to function to provide a water barrier effect and to protect the cable-type secondary battery.

Since heat shrinkable tubes using various materials and having various shapes are commercially available, a heat shrinkable tube suitable for the purpose of the present disclosure can be purchased and used with ease. It is required to set the temperature of shrinking processing at a low temperature in order to prevent any thermal damage to the secondary battery, and to complete shrinking at a temperature of generally 70-200°C, preferably 70-150°C, more preferably 100-150°C, and even more preferably 70-120°C. Such a heat shrinkable tube may comprise polyolefin, such as polyethylene or polypropylene, polyester such as polyethylene terephthalate, fluororesin, such as polyvinylidene fluoride or polytetrafluoroethylene, and polyvinyl chloride, or a mixture thereof.

The cable-type secondary battery according to an embodiment of the present disclosure may comprise a casing tube surrounding the whole outer surface of the packaging. The casing tube may be formed by an injection process, but formation of the casing tube is not limited thereto. The casing tube may be obtained by various processes.

In another aspect of the present disclosure, there is provided a method for manufacturing a cable-type secondary battery, including the steps of:
(S1) preparing an electrode assembly including an inner electrode, a separator layer formed to surround the inner electrode and an outer electrode formed to surround the outer surface of the separator layer;
(S2) disposing a packaging to surround the top surface and the bottom surface of the electrode assembly;
(S3) bringing a portion of the packaging overlapped at an end thereof into heat compression for sealing; and
(S4) folding the overlapped end being heat compressed along the perimeter of the packaging to form a wing portion.

Hereinafter, each step will be explained in more detail.

First, in step (S1), the electrode assembly may comprise: an inner electrode including an inner current collector and an inner electrode active material layer formed on the surface of the inner current collector; a separator layer formed to surround the inner electrode; and an outer electrode formed to surround the outer surface of the separator layer.

In step (S2), a packaging is disposed on the top surface and bottom surface of the electrode assembly. Step (S2) may be carried out by using sealing tools of top and bottom surface portions. For example, the electrode assembly and packaging may be disposed between two sealing tools of top and bottom surface portions.

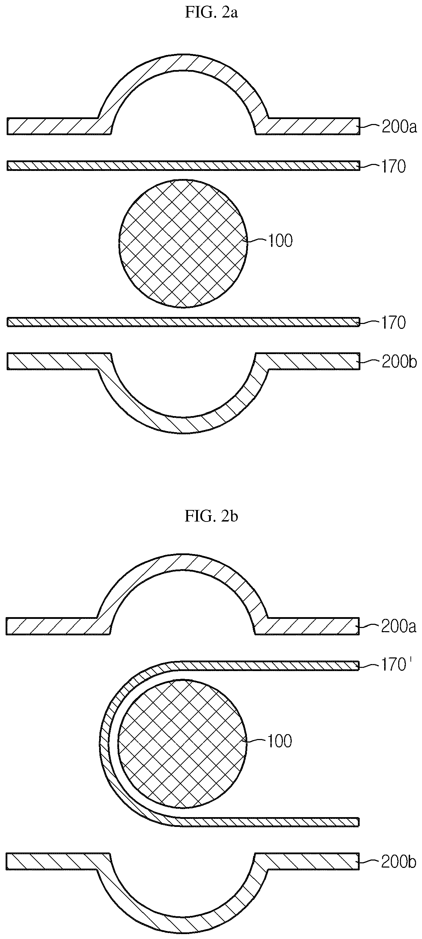

FIG. 2a and FIG. 2b are schematic views illustrating the method for manufacturing a cable-type secondary battery according to an embodiment of the present disclosure. Referring to FIG. 2a, the two sheet of a packaging 170 are disposed above the top surface and below the bottom surface, respectively, of the electrode assembly 100, and sealing may be carried out using two sealing tools of a top surface portion 200a and a bottom surface portion 200b. Referring to FIG. 2b, a monolithic packaging 170' is disposed to surround the top surface and bottom surface of the electrode assembly 100, and sealing may be carried out using two sealing tools of a top surface portion 200a and a bottom surface portion 200b.

In step (S3), the overlapped end of the packaging 170, 170' is sealed through heat compression. Step (S3) may be carried out in sealing tools 200a, 200b and heat compression is carried out while at least one of the top surface portion 200a and the bottom surface portion 200b is moved in the vertical direction.

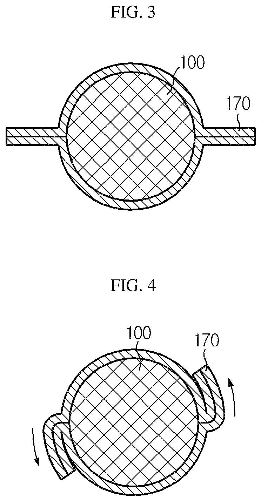

FIG. 3 is a sectional view illustrating a cable-type secondary battery packed according to an embodiment of the present disclosure. Referring to FIG.3, the overlapped ends of the packaging 170 are brought into heat compression so that the electrode assembly 100 may be sealed.

It is required that the heat compression is carried out without thermal damage of the secondary battery. The heat compression may be generally carried out at a temperature of 80-200°C, preferably 160-180°C.

In step (S4), the overlapped end of the packaging through heat compression is folded along the perimeter of the packaging to be a wing portion. The wing part may be formed by way of physical folding only, or by way of physical folding and then additional heat compression.

When two sheets of packaging are used, two wing portions are formed at both ends. When one sheet of packaging is used, one wing portion may be formed at one end.

FIG. 4 is a sectional view illustrating a cable-type secondary battery in which the wing portion is folded according to an embodiment. Referring to FIG. 4, the overlapped parts of both ends may be folded along the perimeter of the packaging 170 to be wing portions.

In addition, before step (S4), the overlapped parts may be subject to cutting. Thereby, the wing portion formed after folding has a width of 1-2 mm. When the wing portion has a width less than 1 mm, the packaging may have insufficient sealability. When the wing portion has a width larger than 3 mm, it may increase the thickness of the cable-type secondary battery, thereby reducing the flexibility of the electrode.

Step (S4) may be carried out in sealing tools. The wing portion may be formed as the overlapped part is folded by rotating the electrode assembly surrounded with the packing in the sealing tools.

In addition, the method for manufacturing a cable-type secondary battery according to another embodiment of the present disclosure may further include step (S5) of inserting the electrode assembly surrounded with the packaging into a heat shrinkable tube, followed by heating it so that the heat shrinkable tube may be shrunk to seal the packaging surrounding the electrode assembly.

In addition, the method for manufacturing a cable-type secondary battery according to still another embodiment of the present disclosure may further include a step of sealing one end of the cable-type secondary battery, injecting an electrolyte and then sealing the other end.

Further, in the cable-type secondary battery according to still another embodiment of the present disclosure, the inner current collector may have an open structure having a space therein. The term 'open structure' means a structure which allows free mass transfer from the inside to the outside through the open structure functioning as a boundary surface.

The inner current collector having such an open structure may be at least one spirally wound wire-, at least one spirally wound sheet-, hollow fiber- or mesh-type support, and may have pores configured to allow an electrolyte to be transferred freely to an inner electrode active material and an outer electrode active material, thereby facilitating wetting.

In addition, an inner electrode current collector core portion may be formed in the space formed in the inner electrode. Herein, the inner electrode current collector core portion may be formed of carbon nanotubes; stainless steel; aluminum; nickel; titanium; baked carbon; copper; stainless steel surface-treated with carbon, nickel, titanium or silver; aluminum-cadmium alloy; a non-conductive polymer surface-treated with a conductive material; or a conductive polymer.

According to a still another embodiment of the present disclosure, a lithium ion supplying core portion including an electrolyte may be formed inside of the inner current collector having an open structure so that the electrolyte of the lithium ion supplying core portion may pass through the inner current collector and arrive at the inner electrode active material layer and the outer electrode active material layer. Herein, the lithium ion supplying core portion may comprise a gel polymer electrolyte and a support. In addition, the lithium ion supplying core portion may comprise a liquid electrolyte and a porous carrier.

Further, a filler core portion may be formed in the space formed in the inner electrode. The filler core portion may comprise a material capable of improving various properties of a cable-type secondary battery, such as a polymer resin, rubber and inorganic materials, in various shapes, such as a wire-, fiber-, powder-, mesh- or a foam-like shape.

The electrolyte may be selected from the group consisting of: a non-aqueous electrolyte using ethylene carbonate (EC), propylene carbonate (PC), butylene carbonate (BC), vinylene carbonate (VC), diethyl carbonate (DEC), dimethyl carbonate (DMC), ethyl methyl carbonate (EMC), methyl formate (MF), γ-butryolactone, sulfolane, methyl acetate (MA) or methyl propionate (MP); a gel polymer electrolyte using PEO, PVdF, PVdF-HFP, PMMA, PAN or PVAc; and a solid electrolyte using PEO, polypropylene oxide (PPO), polyethylene imine (PEI), polyethylene sulfide (PES) or polyvinyl acetate (PVAC). In addition, the electrolyte may further include a lithium salt, such as LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, lithium chloroborate, lithium lower aliphatic carboxylate or lithium tetraphenylborate.

The inner current collector may be made of stainless steel, aluminum, nickel, titanium, baked carbon or copper; stainless steel surface-treated with carbon, nickel, titanium or silver; aluminum-cadmium alloy; a non-conductive polymer surface-treated with a conductive material; or a conductive polymer.

Herein, the current collector functions to collect the electrons generated by the electrochemical reaction of an electrode active material or to supply the electrons required for electrochemical reaction. In general, such a current collector uses a metal, such as copper or aluminum. Particularly, when using a polymer conductor including a non-conductive polymer surface-treated with a conductive material or a polymer conductor, it is possible to provide relatively higher flexibility as compared to the current collector using a metal, such as copper or aluminum. In addition, a polymer current collector may be used instead of a metal current collector to accomplish weight lightening of a battery.

The conductive material may be any one selected from the group consisting of polyacetylene, polyaniline, polypyrrole, polythiophene, polysulfur nitride, indium tin oxide (ITO), silver, palladium and nickel, and the conductive polymer may comprise polyacetylene, polyaniline, polypyrrole, polythiophene, polysulfur nitride, or the like. However, there is no particular limitation in the type of non-conductive polymer used for the current collector.

The inner electrode active material layer is formed on the surface of the inner current collector. Herein, the inner electrode active material may be formed to surround the outer surface of the inner current collector so that the open structure of the inner current collector may not be exposed to the outside of the inner electrode active material layer. The inner electrode active material layer may also be formed on the surface of the open structure of the inner current collector so that the open structure of the inner current collector may be exposed to the outside of the inner electrode active material layer. For example, the active material layer may be formed on the surface of a wound wire-type current collector. In addition, a wire-type current collector having an electrode active material formed thereon may be used after winding.

Although there is no particular limitation in the shape of the outer current collector, a pipe-type current collector, wound wire-type current collector, wound sheet-type current collector or a mesh-type current collector may be used. In addition, the outer current collector may be made of stainless steel, aluminum, nickel, titanium, baked carbon or copper; stainless steel surface-treated with carbon, nickel, titanium or silver; aluminum-cadmium alloy; a non-conductive polymer surface-treated with a conductive material; a conductive polymer; metal paste including metal powder which is Ni, Al, Au, Pd/Ag, Cr, Ta, Cu, Ba or ITO; or carbon paste containing carbon powder which is graphite, carbon black or a carbon nanotube.

The inner electrode may be a negative electrode or positive electrode, and the outer electrode may be a positive electrode or negative electrode corresponding thereto.

The electrode active material layers function to transfer ions through a current collector and such ion transfer results from the interaction through the intercalation of ions from the electrolyte layer and deintercalation of ions toward the electrolyte layer.

Such electrode active material layers may be classified into a negative electrode active material layer and a positive electrode active material layer.

Particularly, the inner electrode may be a negative electrode and the outer electrode may be a positive electrode, or the inner electrode may be a positive electrode and the outer electrode may be a negative electrode. The negative electrode active material may be any one active material particle selected from the group consisting of carbonaceous materials, such as natural graphite and artificial graphite; metals (Me), such as lithium-containing titanium composite oxide (LTO), Si, Sn, Li, Zn, Mg, Cd, Ce, Ni or Fe; alloys of the metals (Me); oxides (MeOx) of the metals (Me); and composites of the metals (Me) with carbon, or a mixture thereof. The positive electrode active material may be any one active material particle selected from the group consisting of LiCoO₂, LiNiO₂, LiMn₂O₄, LiCoPO₄, LiFePO₄, LiNiMn CoO₂ and LiNi_{1-x-y-z}CoₓM1_{y}M2_{z}O₂ (wherein each of M1 and M2 independently represents any one selected from the group consisting of Al, Ni, Co, Fe, Mn, V, Cr, Ti, W, Ta, Mg and Mo, each of x, y and z independently represents an atomic proportion of an element forming the oxides, and 0 ≤ x < 0.5, 0 ≤ y < 0.5, 0 ≤ z < 0.5, 0 < x+y+z ≤ 1), or a mixture thereof.

The electrode active material layer includes an electrode active material layer, a binder and a conductive material, and is bound to a current collector to form an electrode. When an electrode is deformed, for example, by folding or severe bending under external force, separation of an electrode active material occurs. Such separation of an electrode active material causes degradation of the performance and capacity of a battery. However, since the spirally wound sheet-type outer current collector has elasticity and functions to disperse force during the deformation caused by external force, deformation of the electrode active material layer is alleviated to prevent separation of the electrode active material layer.

According to still another embodiment of the present disclosure, the separator layer may be an electrolyte layer or a separator.

The electrolyte layer functioning as an ion channel may comprise a gel polymer electrolyte using PEO, PVdF, PVdF-HFP, PMMA, PAN or PAVc; a solid electrolyte using PEO, polypropylene oxide (PPO), polyethylene imine (PEI), polyethylene sulfide (PES) or polyvinyl acetate (PAVC); and the like. Preferably, the matrix for the solid electrolyte includes a polymer or ceramic glass as a fundamental skeleton. In the case of a general polymer electrolyte, ions may be transported very slowly in terms of reaction rate even though the ion conductivity is satisfied. Thus, it is preferred to use a gel type polymer electrolyte facilitating ion transport rather than a solid electrolyte. Such a gel type polymer electrolyte does not have good mechanical properties and thus may comprise a support in order to supplement mechanical properties. The support used herein may comprise a porous support or crosslinked polymer. The electrolyte layer according to the present disclosure also functions as a separator, and thus use of an additional separator may be avoided.

The electrolyte layer according to the present disclosure may further include a lithium salt. Such a lithium salt can improve ion conductivity and reaction rate. Nonlimiting examples of the lithium salt may comprise LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium,, lower aliphatic lithium carboxylate and lithium tetraphenylborate.

Although there is no particular limitation, the separator may be a porous polymer substrate made of a polyolefin polymer selected from the group consisting of an ethylene homopolymer, propylene homopolymer, ethylene-butene copolymer, ethylene-hexene copolymer and ethylene-methacrylate copolymer; a porous polymer substrate made of a polymer selected from the group consisting of polyester, polyacetal, polyamide, polycarbonate, polyimide, polyetherether ketone, polyether sulfone, polyphenylene oxide, polyphenylene sulfide and polyethylene naphthalate; a porous substrate formed of a mixture of inorganic particles and a binder polymer; or a separator provided with a porous coating layer formed of a mixture of inorganic particles and a binder polymer on at least one surface of the porous polymer substrate.

Herein, in the porous coating layer formed of a mixture of inorganic particles and a binder, the binder polymer attaches the inorganic particles (i.e., connects and fixes the inorganic particles to each other) so that the inorganic particles may be bound with each other. In addition, the porous coating layer is maintained so that they are bound with the porous polymer substrate by the polymer binder. The inorganic particles in the porous coating layer are in contact with each other substantially in a closed packed or densely packed structure, and the interstitial volumes formed among the inorganic particles that are in contact with each other become the pores of the porous coating layer.

Particularly, in order to transfer lithium ions of the lithium ion supplying core portion easily to the outer electrode, it is preferred to use a separator including a non-woven web material corresponding to a porous polymer substrate made of a polymer selected from the group consisting of polyester, polyacetal, polyamide, polycarbonate, polyimide, polyetherether ketone, polyether sulfone, polyphenylene oxide, polyphenylene sulfide and polyethylene naphthalate.

According to still another embodiment of the present disclosure, the inner electrode may comprise two or more inner current collectors.

According to still another embodiment of the present disclosure, the electrode assembly may comprise: an inner electrode including an inner current collector and an inner electrode active material layer formed on the surface of the inner current collector; a separator layer formed to surround the inner electrode; and a sheet-like outer electrode formed to surround the separator layer or the inner electrode through spiral winding, and including an outer current collector and an outer electrode active material layer formed on one surface of the outer current collector, wherein the inner electrode active material layer includes a first binder and the outer electrode active material layer includes a second binder, the first binder is used in an amount of 1-30 wt% based on the total weight of the inner electrode active material layer, and the second binder is used in an amount of 1-30 wt% based on the total weight of the outer electrode active material layer.

The sheet-like outer electrode may have a strip structure extended in one direction.

In addition, the sheet-like outer electrode may be formed through spiral winding to avoid any overlap. Herein, the sheet-like outer electrode may be formed through spiral winding to avoid any overlap by being spaced with an interval of 2 times or less of the width of the sheet-like outer electrode in order to prevent degradation of the performance of a battery. In addition, the sheet-like outer electrode may be formed through spiral winding so that an overlap may be formed. Herein, the sheet-like outer electrode may be formed through spiral winding so that the overlap may have a width corresponding to 0.9 times or less of the width of outer electrode in order to inhibit an excessive increase in the internal resistance of a battery.

The outer current collector may be a mesh-type current collector.

In addition, the sheet-like outer electrode may further include a porous first support layer formed on the electrode active material layer formed on the other surface of the outer current collector. Herein, the first support layer may be a mesh-type porous membrane or non-woven web.

Meanwhile, the sheet-like outer electrode may further include a porous second support layer formed on the outer electrode active material layer. Herein, the second support layer may be a mesh-type porous membrane or non-woven web. In addition, the outer electrode may further include a conductive coating layer including a conductive material and a binder on the second support layer.

In addition, a plurality of intrusions may be formed on at least one surface of the inner current collector and outer current collector in order to increase the surface area thereof. Herein, the intrusions may have a continuous patter or a discontinuous pattern. In other words, the intrusions may have a continuous pattern wherein they are spaced apart from each other and formed in the longitudinal direction. Otherwise, the discontinuous pattern may have a plurality of holes, and the holes may be circular or polygonal holes.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the examples described herein are for illustrative purposes only and not intended to limit the scope of this disclosure. The scope of the present disclosure is defined by the following claims, and it is to be understood that various changes and modifications within the equivalents thereof fall within the scope of the present disclosure.

### [Description of Drawing Numerals]

100: Electrode assembly
110: Inner electrode current collector
120: Inner electrode active material layer
130: Separator layer
140: Outer electrode active material layer
150: Outer electrode current collector
170, 170': Packaging
200a: Sealing tool of top surface portion
200b: Sealing tool of bottom surface portion

## Claims

1. A cable-type secondary battery, comprising
an electrode assembly (100) comprising an inner electrode, a separator layer (130) formed to surround the inner electrode, and an outer electrode formed to surround the outer surface of the separator layer (130); and
a packaging (170, 170') surrounding the electrode assembly (100),
wherein the packaging (170, 170') surrounds the top surface and the bottom surface of the electrode assembly (100) and a portion of the packaging (170, 170') is overlapped at an end thereof and sealed by heat compression, and the overlapped end is folded along the perimeter of the packaging (170, 170') to be a wing portion,
the wing portion having a width of 1 to 2 mm.

2. The cable-type secondary battery according to claim 1, wherein the packaging (170, 170') comprises a water barrier film, and a first sealant polymer layer and a mechanical support layer formed on both surfaces of the water barrier film.

3. The cable-type secondary battery according to claim 2, wherein the packaging (170, 170') further comprises a second sealant polymer layer formed on the surface of the mechanical support layer.

4. The cable-type secondary battery according to claim 1, wherein the packaging (170, 170') further comprises an adhesive layer at the outermost part thereof.

5. The cable-type secondary battery according to claim 1, which further comprises a heat shrinkable tube surrounding the packaging (170, 170').

6. A method for manufacturing a cable-type secondary battery, comprising the steps of:
(S1) preparing an electrode assembly (100) including an inner electrode, a separator layer (130) formed to surround the inner electrode and an outer electrode formed to surround the outer surface of the separator layer (130);
(S2) disposing a packaging (170, 170') to surround the top surface and the bottom surface of the electrode assembly (100);
(S3) bringing a portion of the packaging (170, 170') overlapped at an end thereof into heat compression for sealing; and
(S4) folding the overlapped end being heat compressed along the perimeter of the packaging (170, 170') to form a wing portion,
the wing portion having a width of 1 to 2 mm.

7. The method for manufacturing a cable-type secondary battery according to claim 6, wherein the steps of (S3) and (S4) are carried out by using sealing tools of top and bottom surface portions (200a, 200b).

8. The method for manufacturing a cable-type secondary battery according to claim 6, wherein in the step of (S4), the wing portion is formed by way of physical folding, or by way of physical folding and then additional heat compression.

9. The method for manufacturing a cable-type secondary battery according to claim 6, wherein in the step of (S4), the wing portion is formed by rotating the electrode assembly (100) surrounded with the packaging (170, 170') in the sealing tools (200a, 200b).

10. The method for manufacturing a cable-type secondary battery according to claim 6, wherein the packaging (170, 170') comprises a water barrier film, and a first sealant polymer layer and a mechanical support layer formed on both surfaces of the water barrier film.

11. The method for manufacturing a cable-type secondary battery according to claim 10, wherein the packaging (170, 170') further comprises a second sealant polymer layer formed on the surface of the mechanical support layer.

12. The method for manufacturing a cable-type secondary battery according to claim 6, wherein the packaging (170, 170') further comprises an adhesive layer at the outermost part thereof.

13. The method for manufacturing a cable-type secondary battery according to claim 6, which further comprises a step (S5) of inserting the electrode assembly (100) surrounded with the packaging (170, 170') into a heat shrinkable tube, followed by heating so that the heat shrinkable tube is shrunk by heat to seal the packaging (170, 170') surrounding the electrode assembly (100).

## Patentansprüche

1. Kabelartige Sekundärbatterie, umfassend:
eine Elektrodenanordnung (100), welche eine innere Elektrode, eine Separatorschicht (130), welche derart ausgebildeter ist, dass sie die innere Elektrode umgibt, und äußere Elektrode, welche derart ausgebildet ist, dass sie die äußere Fläche der Separatorschicht (130) umgibt; und
eine Verpackung (170, 170'), welche die Elektrodenanordnung (100) umgibt,
wobei die Verpackung (170, 170') die obere Fläche und die untere Fläche der Elektrodenanordnung (100) umgibt und ein Abschnitt der Verpackung (170, 170') an einem Ende davon überlappend ist und mittels Wärmekompression abgedichtet ist, und wobei das überlappende Ende entlang des Umfangs der Verpackung (170, 170') derart gefaltet ist, dass es ein Flügelabschnitt ist,
wobei der Flügelabschnitt eine Breite von 1 bis 2 mm aufweist.

2. Kabelartige Sekundärbatterie nach Anspruch 1, wobei die Verpackung (170, 170') einen Wassersperrfilm und eine erste Abdichtungspolymerschicht sowie eine mechanische Unterstützungsschicht umfasst, welche an beiden Flächen des Wassersperrfilms ausgebildet sind.

3. Kabelartige Sekundärbatterie nach Anspruch 2, wobei die Verpackung (170, 170') ferner eine zweite Abdichtungspolymerschicht umfasst, welche an der Fläche der mechanischen Unterstützungsschicht ausgebildet ist.

4. Kabelartige Sekundärbatterie nach Anspruch 1, wobei die Verpackung (170, 170') ferner eine Haftschicht an dem äußersten Teil davon umfasst.

5. Kabelartige Sekundärbatterie nach Anspruch 1, welche ferner einen wärmeschrumpfbaren Schlauch umfasst, welcher die Verpackung (170, 170') umgibt.

6. Verfahren zum Herstellen einer kabelartigen Sekundärbatterie, umfassend die Schritte:
(S1) Bereitstellen einer Elektrodenanordnung (100), welche eine innere Elektrode, eine Separatorschicht (130), welche derart ausgebildet ist, dass sie die innere Elektrode umgibt, und eine äußere Elektrode, welche derart ausgebildet ist, dass sie die äußere Fläche der Separatorschicht (130) umgibt;
(S2) Anordnen einer Verpackung (170, 170') derart, dass sie die obere Fläche und die untere Fläche der Elektrodenanordnung (100) umgibt;
(S3) Unterziehen eines Abschnitts der Verpackung (170, 170'), welcher an einem Ende davon überlappend ist, einer Wärmekompression zum Abdichten; und
(S4) Falten des der Wärmekompression unterzogenen überlappenden Endes entlang des Umfangs der Verpackung (170, 170'), um einen Flügelabschnitt auszubilden,
wobei der Flügelabschnitt eine Breite von 1 bis 2 mm aufweist.

7. Verfahren zum Herstellen einer kabelartigen Sekundärbatterie nach Anspruch 6, wobei die Schritte (S3) und (S4) unter Verwendung von Abdichtungswerkzeugen auf oberen- und unteren Flächenabschnitten (200a, 200b) ausgeführt werden.

8. Verfahren zum Herstellen einer kabelartigen Sekundärbatterie nach Anspruch 6, wobei in dem Schritt (S4) der Flügelabschnitt im Wege eines physikalischen Faltens oder im Wege eines physikalischen Faltens und einer anschließenden Wärmekompression ausgebildet wird.

9. Verfahren zum Herstellen einer kabelartigen Sekundärbatterie nach Anspruch 6, wobei in dem Schritt (S4) der Flügelabschnitt mittels Drehen der Elektrodenanordnung (100), welche von der Verpackung (170, 170') umgeben ist, in den Abdichtungswerkzeugen (200a, 200b) ausgebildet wird.

10. Verfahren zum Herstellen einer kabelartigen Sekundärbatterie nach Anspruch 6, wobei die Verpackung (170, 170') einen Wassersperrfilm und eine erste Abdichtungspolymerschicht sowie eine mechanische Unterstützungsschicht umfasst, welche an beiden Flächen des Wassersperrfilms ausgebildet sind.

11. Verfahren zum Herstellen einer kabelartigen Sekundärbatterie nach Anspruch 10, wobei die Verpackung (170, 170') ferner eine zweite Abdichtungspolymerschicht umfasst, welche an der Fläche der mechanischen Unterstützungssicht ausgebildet ist.

12. Verfahren zum Herstellen einer kabelartigen Sekundärbatterie nach Anspruch 6, wobei die Verpackung (170, 170') ferner eine Haftschicht an dem äußersten Teil davon umfasst.

13. Verfahren zum Herstellen einer kabelartigen Sekundärbatterie nach Anspruch 6, welches ferner einen Schritt (S5) eines Einsetzens der Elektrodenanordnung (100), welche von der Verpackung (170, 170') umgeben ist, in einen wärmeschrumpfbaren Schlauch, gefolgt durch ein derartiges Erwärmen, dass der wärmeschrumpfbare Schlauch mittels Wärme aufgeschrumpft wird, um die Verpackung (170, 170'), welche die Elektrodenanordnung (100) umgibt, abzudichten.

## Revendications

1. Batterie secondaire de type câble, comprenant
un ensemble électrode (100) comprenant une électrode interne, une couche de séparateur (130) formée pour entourer l'électrode interne, et une électrode externe formée pour entourer la surface externe de la couche de séparateur (130) ; et
un emballage (170, 170') entourant l'ensemble électrode (100),
dans laquelle l'emballage (170, 170') entoure la surface de dessus et la surface de dessous de l'ensemble électrode (100) et une portion de l'emballage (170, 170') est chevauchée à une de ses extrémités et étanchée par thermocompression, et l'extrémité chevauchée est pliée le long du périmètre de l'emballage (170, 170') pour devenir une portion d'aile,
la portion d'aile ayant une largeur de 1 à 2 mm.

2. Batterie secondaire de type câble selon la revendication 1, dans laquelle l'emballage (170, 170') comprend un film barrière à l'eau, et une première couche de polymère d'étanchéité et une couche de support mécanique formée sur les deux surfaces du film barrière à l'eau.

3. Batterie secondaire de type câble selon la revendication 2, dans laquelle l'emballage (170, 170') comprend en outre une seconde couche de polymère d'étanchéité formée sur la surface de la couche de support mécanique.

4. Batterie secondaire de type câble selon la revendication 1, dans laquelle l'emballage (170, 170') comprend en outre une couche adhésive au niveau de sa partie la plus externe.

5. Batterie secondaire de type câble selon la revendication 1, qui comprend en outre un tube thermorétractable entourant l'emballage (170, 170').

6. Procédé de fabrication d'une batterie secondaire de type câble, comprenant les étapes de :
(S1) préparation d'un ensemble électrode (100) incluant une électrode interne, une couche de séparateur (130) formée pour entourer l'électrode interne et une électrode externe formée pour entourer la surface externe de la couche de séparateur (130) ;
(S2) disposition d'un emballage (170, 170') pour entourer la surface de dessus et la surface de dessous de l'ensemble électrode (100) ;
(S3) amener une portion de l'emballage (170, 170') chevauchée à l'une de ses extrémités en thermocompression pour étanchéité ; et
(S4) pliage de l'extrémité chevauchée qui est thermocomprimée le long du périmètre de l'emballage (170, 170') pour former une portion d'aile,
la portion d'aile ayant une largeur de 1 à 2 mm.

7. Procédé de fabrication d'une batterie secondaire de type câble selon la revendication 6, dans lequel les étapes de (S3) et (S4) sont réalisées en utilisant des outils d'étanchéité de portions de surface de dessus et de dessous (200a, 200b).

8. Procédé de fabrication d'une batterie secondaire de type câble selon la revendication 6, dans lequel dans l'étape de (S4), la portion d'aile est formée au moyen d'un pliage physique, ou au moyen d'un pliage physique puis d'une thermocompression additionnelle.

9. Procédé de fabrication d'une batterie secondaire de type câble selon la revendication 6, dans lequel dans l'étape de (S4), la portion d'aile est formée en mettant en rotation l'ensemble électrode (100) entouré avec l'emballage (170, 170') dans les outils d'étanchéité (200a, 200b).

10. Procédé de fabrication d'une batterie secondaire de type câble selon la revendication 6, dans lequel l'emballage (170, 170') comprend un film barrière à l'eau, et une première couche de polymère d'étanchéité et une couche de support mécanique formée sur les deux surfaces du film barrière à l'eau.

11. Procédé de fabrication d'une batterie secondaire de type câble selon la revendication 10, dans lequel l'emballage (170, 170') comprend en outre une seconde couche de polymère d'étanchéitéformée sur la surface de la couche de support mécanique.

12. Procédé de fabrication d'une batterie secondaire de type câble selon la revendication 6, dans lequel l'emballage (170, 170') comprend en outre une couche adhésive au niveau de sa partie la plus externe.

13. Procédé de fabrication d'une batterie secondaire de type câble selon la revendication 6, qui comprend en outre une étape (S5) d'insertion de l'ensemble électrode (100) entouré avec l'emballage (170, 170') dans un tube thermorétractable, suivie par un chauffage pour que le tube thermorétractable soit rétracté par la chaleur en vue d'étancher l'emballage (170, 170') entourant l'ensemble électrode (100).
